# EUROPÄISCHE PATENTSCHRIFT

(11) **EP 1 198 366 B1**
(45) Veröffentlichungstag und Bekanntmachung des Hinweises auf die Patenterteilung: **26.11.2003**
(21) Anmeldenummer: 01936424.9
(22) Anmeldetag: 02.06.2001
(51) Int. Cl.: B60K 41/28, B60R 16/02

(54) **STEUERUNGSSYSTEM FÜR EIN FAHRZEUG UND VERFAHREN ZUR STEUERUNG EINES FAHRZEUGS**
VEHICLE CONTROL SYSTEM AND METHOD FOR CONTROLLING A VEHICLE
SYSTEME DE COMMANDE POUR UN VEHICULE ET PROCEDE POUR LA COMMANDE D'UN VEHICULE

(30) Priorität: 01.07.2000 DE 10032179
(43) Veröffentlichungstag der Anmeldung: 24.04.2002
(73) Patentinhaber: DaimlerChrysler AG, 70567 Stuttgart (DE)
(72) Erfinder: BAUER, Wolf-Dietrich, 70178 Stuttgart (DE); HÄMMERLING, Carsten, 70372 Stuttgart (DE); KIRCHMANN, Albert, 73760 Ostfildern (DE); SCHWARZHAUPT, Andreas, 74420 Oberrot (DE); SPIEGELBERG, Gernot, 71296 Heimsheim (DE); STAHL, Wolfgang, 72644 Oberboihingen (DE); WEITZE, Udo, 70372 Stuttgart (DE)
(86) Internationale Anmeldenummer: EP0106307
(87) Internationale Veröffentlichungsnummer: WO02002366

(56) Entgegenhaltungen:
- WO-A-99/01320
- DE-A- 19 709 318
- DE-A- 19 709 319
- DE-A- 19 838 336
- US-A- 6 038 505

## Beschreibung

Die Erfindung betrifft ein Steuerungssystem für ein Fahrzeug mit mehreren Signalverarbeitungsebenen und Aktuatoren, insbesondere für Bremse, Lenkung, Motor und Getriebe, zur Umsetzung von Ansteuersignalen sowie ein Verfahren zur Steuerung eines Fahrzeugs.

Gattungsgemäße Steuerungssysteme für Fahrzeuge werden auch als Drive-by-Wire-Systeme oder x-by-Wire-Systeme bezeichnet. Bei solchen Systemen werden Lenkung, Bremse und Antrieb eines Fahrzeugs elektronisch gesteuert, ohne dass zwischen Lenkrad und den gelenkten Rädern eine durchgehende mechanische Verbindung besteht oder zwischen Bremspedal und der Betriebsbremse für die Räder eine durchgehende mechanische oder hydraulische Verbindung besteht.

Aus der Offenlegungsschrift DE 41 11 023 A1 ist ein Steuersystem für ein Fahrzeug bekannt, das in Hierarchieebenen aufgebaut ist, die bei der Signalverarbeitung in vorgegebener Reihenfolge durchlaufen werden. Die Signalverarbeitung für die Bereiche Lenkung, Radantrieb und Fahrwerk erfolgt getrennt, wodurch sich der Signalverarbeitungspfad in den unteren Hierarchieebenen verästelt und sich ein komplexer Aufbau des Steuerungssystems ergibt. Ein Sicherheitskonzept, das den möglichen Ausfall von Komponenten berücksichtigt, ist nicht vorgesehen.

In dem in der Patentschrift DE 40 39 005 C2 beschriebenen Steuerungssystem für ein Fahrzeug ist zur Sicherung der Betriebsfähigkeit des Systems vorgesehen, dass neben einer Verbindung eines Bedienelements mit einer zentralen Steuereinheit und einem Aktuator mit einer Substeuerung über einen Datenbus eine zusätzliche, direkte Verbindung zwischen dem Bedienelement und dem Aktuator mit der Substeuerung vorgesehen ist. Damit liegen zwei unterschiedlich aufgebaute Verkabelungen des Systems gleichzeitig vor.

Aus der europäischen Offenlegungsschrift EP 0 754 611 A1 ist ein Brems- und Lenksystem für ein Fahrzeug bekannt, bei dem versucht wird, die Sicherstellung der Betriebsfähigkeit bei Ausfall von Komponenten mit Mitteln der Fehlertoleranz und Redundanz zu erreichen. Als Fehlertoleranz wird die Fähigkeit eines Systems bezeichnet, auch mit einer begrenzten Zahl fehlerhafter Subsysteme seine spezifische Funktion zu erfüllen. Unter Redundanz wird das Vorhandensein von mehr als für die Ausführung der vorgesehenen Aufgaben an sich notwendigen Mitteln verstanden.

Die DE 19 709 318 zeigt die Merkmale des Oberbegriffs des Anspruchs 1 oder 8.

Der Erfindung liegt als technisches Problem die Schaffung eines sicheren und zuverlässigen Steuerungssystems mit vergleichsweise einfachem Aufbau und die Bereitstellung eines zuverlässigen und sicheren Verfahrens zur Steuerung eines Fahrzeugs zugrunde.

Erfindungsgemäß ist hierzu ein Steuerungssystem für ein Fahrzeug mit mehreren Signalverarbeitungsebenen und Aktuatoren, insbesondere für Bremse, Lenkung, Motor und Getriebe, zur Umsetzung von Ansteuersignalen vorgesehen, bei dem folgende Signalverarbeitungsebenen vorgesehen sind: Eine Eingabeebene mit Einrichtungen zum Eingeben kontinuierlicher Vorgaben eines Fahrers und zum Umsetzen der Vorgaben in Sollwertsignale oder eine Eingabeebene mit Einrichtungen zum Eingeben diskreter Vorgaben eines Fahrsystems sowie eine Automatisierungsebene mit ersten Signalverarbeitungsmodulen zum Umsetzen der Vorgaben der Eingabeebene in Sollwertsignale, eine prediktive Ebene mit zweiten Signalverarbeitungsmodulen zum Korrigieren der Sollwertsignale anhand einer Voraussage von Fahrzuständen und/oder eine reaktive Ebene mit dritten Signalverarbeitungsmodulen zum Korrigieren der Sollwertsignale anhand von aktuellen Fahrzuständen, eine Koordinationsebene mit vierten Signalverarbeitungsmodulen zum Umsetzen der Sollwertsignale in Ansteuersignale und eine Ausführungsebene mit den Aktuatoren zum Umsetzen der Ansteuersignale, wobei die Aktuatoren durch einen fehlertoleranten, redundanten und bidirektionalen Datenbus verbunden sind, die ersten, zweiten, dritten und/oder vierten Signalverarbeitungsmodule zur redundanten Signalverarbeitung ausgelegt sind und zwischen zwei aufeinanderfolgenden Signalverarbeitungsebenen Einrichtungen zur fehlertoleranten; redundanten und bidirektionalen Datenübertragung vorgesehen sind.

Durch diese Merkmale wird ein Steuerungssystem mit einfachem, modularem Aufbau geschaffen, bei dem einzelne Signal-verarbeitungsebenen, beispielsweise die prediktive Ebene, weggelassen werden können, wenn ihre Funktionalität nicht benötigt wird, ohne dass der grundlegende Aufbau des Steuerungssystems aufgegeben werden muß. Damit wird im Vergleich zu bisherigen Steuerungssystemen ein äußerst flexibles Steuerungssystem geschaffen. Das Vorsehen einer Koordinationsebene zum Umsetzen der Sollwertsignale in Ansteuersignale schafft eine definierte Schnittstelle, mit der die Ebenen, in denen die ursprünglichen Vorgaben bearbeitet werden, von den Ebenen entkoppelt werden, in denen die Ausführung der bearbeiteten Vorgaben erfolgt. Eine solche definierte Schnittstelle vereinfacht den Aufbau und erleichtert Änderungen und Erweiterungen des Steuerungssystems beträchtlich. Darüber hinaus wird durch redundante Signalverarbeitung und fehlertolerante und redundante Datenübertragung eine hohe Ausfallsicherheit des Steuerungssystems erreicht. Die bidirektionale Datenverarbeitung zwischen aufeinanderfolgenden Signalverarbeitungsebenen, also auch zwischen den Aktuatoren und der Koordinationsebene, ermöglicht eine Übertragung von Sollwertsignalen und eine Rückführung von Istwert- und Diagnosewertsignalen.

In Weiterbildung der Erfindung ist die reaktive Ebene zwischen der Koordinationsebene und der Ausführungsebene angeordnet. Damit werden die Ansteuersignale für die Aktuatoren anhand von aktuellen Fahrzuständen korrigiert. Dies kann in bezug auf eine schnelle Reaktion auf kritische Fahrzustände von Vorteil sein, da unmittelbar die Ansteuersignale für die Aktuatoren korrigiert werden.

In vorteilhafter Weise ist wenigstens einem Aktuator ein reaktives Signalverarbeitungsmodul zur Reaktion auf kritische, aktuelle Fahrzustände unmittelbar zugeordnet. Auch diese Ausbildung der Erfindung ist im Hinblick auf eine schnelle Reaktion auf kritische Fahrzustände vorteilhaft. So kann beispielsweise ein Antiblockiersystem unmittelbar der Radbremse zugeordnet sein.

Als weiterbildende Maßnahme ist vorgesehen, dass Einrichtungen zur Energieversorgung für alle Signalverarbeitungsebenen redundant ausgeführt sind. Diese Maßnahme trägt zu einer erheblich gesteigerten Ausfallsicherheit des Steuerungssystems bei.

Es ist ebenfalls vorteilhaft, dass die Einrichtungen zur bidirektionalen Datenübertragung als Lichtwellenleiter ausgeführt sind. Durch Lichtwellenleiter kann eine schnelle und von äußeren Störeinflüssen vergleichsweise unabhängige Datenübertragung erreicht werden.

In Weiterbildung der Erfindung ist vorgesehen, dass in der Automatisierungsebene, der prediktiven Ebene, der reaktiven Ebene und der Koordinationsebene jeweils wenigstens zwei physikalisch getrennte erste, zweite, dritte bzw. vierte Signalverarbeitungsmodule zur redundanten Signalverarbeitung vorgesehen sind. Eine solche Hardware-Redundanz verbessert die Zuverlässigkeit des Steuersystems.

Als weiterbildende Maßnahme ist vorgesehen, dass in den ersten, zweiten, dritten bzw. vierten Signalverarbeitungsmodulen vorgesehene Software redundant ausgeführt ist. Hierdurch wird die Zuverlässigkeit des Steuerungssystems weiter verbessert.

Gemäß der Erfindung wird auch ein Verfahren zur Steuerung eines Fahrzeugs, insbesondere von dessen Bremse, Lenkung, Motor und Getriebe vorgeschlagen, das folgende Schritte aufweist: Eingeben kontinuierlicher Vorgaben eines Fahrers oder diskreter Vorgaben eines Fahrsystems und Umsetzen der Vorgaben in Sollwertsignale, Korrigieren der Sollwertsignale anhand einer Voraussage von Fahrzuständen und/oder Korrigieren der Sollwertsignale anhand von aktuellen Fahrzuständen, Umsetzen der Sollwertsignale in Ansteuersignale und Ausführen der Ansteuersignale durch Aktuatoren, wobei die Ansteuersignale zu den Aktuatoren sowie Istwertsignale und Diagnosesignale von den Aktuatoren in fehlertoleranter und redundanter Weise über einen Datenbus übertragen werden, das Umsetzen der Vorgaben in Sollwertsignale, das Korrigieren der Sollwertsignale und das Umsetzen der Sollwertsignale in Ansteuersignale in redundanter Weise erfolgt und Sollwertsignale, Istwertsignale sowie Diagnosesignale auf gemeinsamen Datenleitungen fehlertolerant, redundant und bidirektional übertragen werden.

Weitere Merkmale und Vorteile der Erfindung ergeben sich aus der nachfolgenden Beschreibung im Zusammenhang mit den beigefügten Zeichnungen, die folgendes zeigen:
- Fig. 1: eine schematische Darstellung eines erfindungsgemäßen Steuerungssystems gemäß einer ersten Ausführungsform und
- Fig. 2: eine schematische Darstellung eines erfindungsgemäßen Steuerungssystems gemäß einer zweiten Ausführungsform der Erfindung.

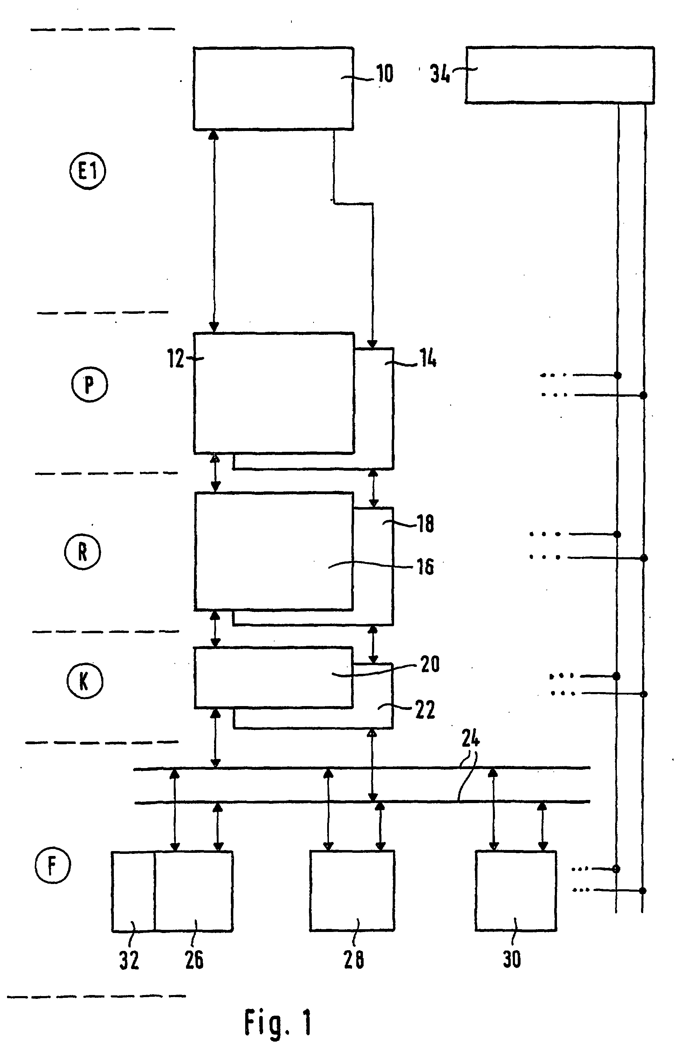

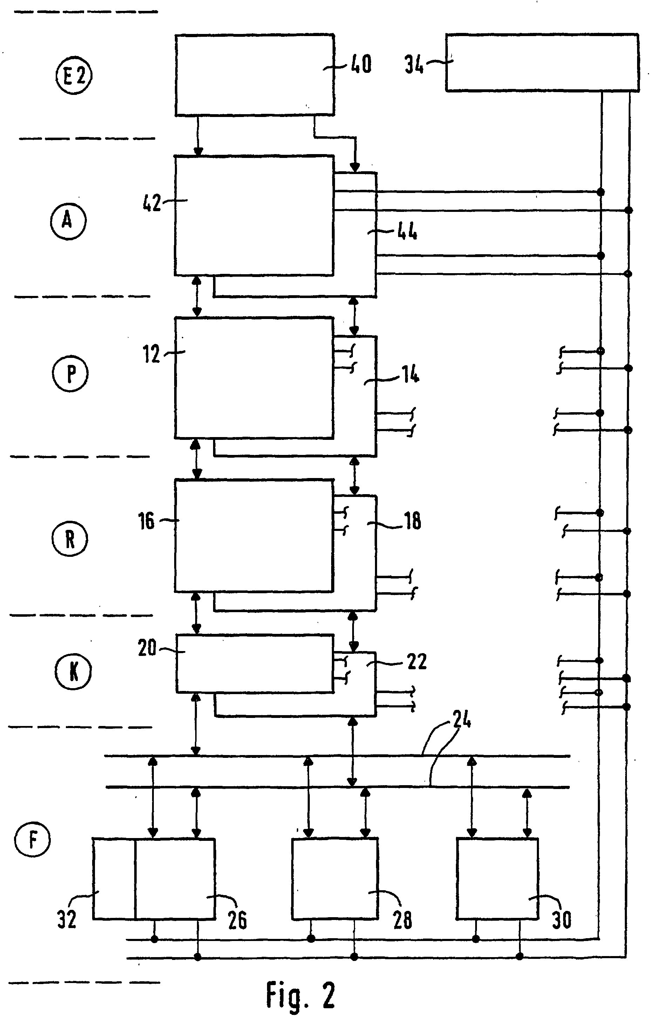

In der schematischen Darstellung des erfindungsgemäßen Steuerungssystems für ein Fahrzeug in der Fig. 1 sind mehrere Signalverarbeitungsebenen zu erkennen. In einer Eingabeebene E gibt ein Fahrer kontinuierliche Vorgaben für die Längsbewegung vor, die in der Einrichtung 10 in ein Sollwertsignal umgesetzt werden. Indem der Fahrer Bedienelemente, beispielsweise Sidestick oder Fahrpedal, Bremspedal und Lenkrad betätigt oder auch nur in einer bestimmten Stellung hält, gibt er über der Zeit gesehen kontinuierlich vor, wie die Längsbewegung des Fahrzeugs erfolgen soll. Im Unterschied zur kontinuierlichen Vorgabe eines Fahrers erfolgt bei Verwendung eines autonomen Fahrsystems, wie es bei der Ausführungsform der Fig. 2 vorgesehen ist, lediglich eine einmalige diskrete Vorgabe, z.B. "Fahre von A nach B", die dann vom Fahrzeugsteuerungssystem ausgeführt wird.

Das aus den kontinuierlichen Vorgaben des Fahrers erzeugte Sollwertsignal wird einer prediktiven Ebene P zugeführt, in der das Sollwertsignal unter Berücksichtigung einer Voraussage von Fahrzuständen korrigiert wird. Eine Voraussage von Fahrzuständen erfolgt beispielsweise durch ein im Fahrzeug vorhandenes prediktives System zur Vermeidung kritischer Fahrzustände. Ein solches System warnt beispielsweise bei zu hoher Geschwindigkeit für eine bevorstehende Kurve oder bremst das Fahrzeug gar ab. Der Kurvenradius kann beispielsweise mit Hilfe von GPS (Global Positioning System) und einer Straßenkarte festgestellt werden, weitere Diagnosesignale können von Sensoren zur Erfassung des Straßenzustandes kommen. Die Funktionen der prediktiven Ebene P werden durch die Signalverarbeitungsmodule 12 und 14 ausgeführt. Wie in der Fig. 1 zu erkennen ist, wird das Sollwertsignal von der Einrichtung 10 den Signalverarbeitungsmodulen 12 bzw. 14 über getrennte Datenleitungen zugeführt. Die Signalverarbeitungsmodule 12 und 14 sind dabei physikalisch getrennt. Die Signalverarbeitung erfolgt dann redundant sowohl im Signalverarbeitungsmodul 12 als auch im Signalverarbeitungsmodul 14. Damit ist auch bei Ausfall eines der Module 12 oder 14 die Funktion der prediktiven Ebene P sichergestellt.

Von den Signalverarbeitungsmodulen 12 bzw. 14 der prediktiven Ebene P wird das dort eventuell korrigierte Sollwertsignal in eine reaktive Ebene R zu dortigen Signalverarbeitungsmodulen 16 und 18 übertragen. In der reaktiven Ebene R werden Systemfunktionen ausgeführt, die auf kritische Fahrzustände des Fahrzeugs reagieren. Solche Systemfunktionen sind beispielsweise Fahrdynamikregelungen, die bei zu hoher Kurvengeschwindigkeit ein Ausbrechen des Fahrzeugs verhindern.

Von der reaktiven Ebene R wird das dort eventuell korrigierte Sollwertsignal dann einer Koordinationsebene K und dortigen Signalverarbeitungsmodulen 20 und 22 zugeführt. In den Signalverarbeitungsmodulen 20 und 22 erfolgt die Umsetzung der Sollwertsignale in Ansteuersignale.

Diese Ansteuersignale werden von der Koordinationsebene K über einen fehlertoleranten, redundanten und bidirektionalen Datenbus 24 zu Aktuatoren 26, 28 und 30 übertragen, die in einer Ausführungsebene F liegen. Der Aktuator 26 ist dabei der Fahrzeugbremse, Aktuator 28 der Lenkung und Aktuator 30 Motor und Getriebe des Fahrzeugs zugeordnet. In der Ausführungsebene F werden die Ansteuersignale von der Koordinationsebene K durch die Aktuatoren 26, 28 und 30 ausgeführt. In der schematischen Darstellung der Fig. 1 ist zur Vereinfachung der Darstellung lediglich ein Aktuator 30 für Motor und Getriebe vorgesehen. Tatsächlich können für Motor und Getriebe mehrere Aktuatoren vorgesehen sein, wobei nicht sicherheitskritische Aktuatoren, beispielsweise für einen Motor, nicht unbedingt an einen redundanten Datenbus angeschlossen sein müssen, da für nicht sicherheitskritische Aktuatoren der Anschluß an einen einfachen Datenbus genügt.

Ebenfalls in der Ausführungsebene F angeordnet ist ein reaktives Signalverarbeitungsmodul 32, das unmittelbar dem für die Fahrzeugbremse vorgesehenen Aktuator 26 zugeordnet ist. Dieses Signalverarbeitungsmodul 32 verwirklicht die Funktion eines Antiblockiersystems und ist zur Erreichung kurzer Signalverarbeitungs- und Signallaufzeiten in der Ausführungsebene F angeordnet und unmittelbar dem Aktuator 26 zugeordnet.

Ebenfalls in der Fig. 1 zu erkennen ist ein Bordnetz 34, das zur Energieversorgung der einzelnen Ebenen E1, P, R, K und F vorgesehen ist. Die Energieversorgung ist dabei redundant ausgeführt, so dass eine hohe Zuverlässigkeit erreicht wird. In der Darstellung der Fig. 1 ist die Energieversorgung der einzelnen Signalverarbeitungsmodule 12 bis 20 sowie der Aktuatoren 26 bis 30 jedoch nur durch Punkte angedeutet, die die Fortsetzung der Energiezuführungsleitungen darstellen sollen.

Die Datenübertragung zwischen den Signalverarbeitungsmodulen der prediktiven Ebene P, der reaktiven Ebene R und der Koordinationsebene K erfolgt in fehlertoleranter, redundanter und bidirektionaler Weise. Während Sollwertsignale in der Fig. 1 von oben nach unten, d.h. beispielsweise von der prediktiven Ebene P zu der reaktiven Ebene R und der Koordinationsebene K übertragen werden, erfolgt die Übertragung von Istwertsignalen und Diagnosewertsignalen in umgekehrter Richtung. Istwertsignale und Diagnosewertsignale werden auch von den in der Ausführungsebene F angeordneten Aktuatoren 26, 28 und 30 über den Bus 24 zu den Signalverarbeitungsmodulen 20 und 22 der Koordinationsebene K übertragen.

Somit finden alle Datenübertragungen zwischen den Ebenen P, R, K und F in fehlertoleranter, redundanter und bidirektionaler Weise statt. Als Leiter für die Datenübertragung können dabei sowohl elektrische als auch optische Leiter, z.B. Glasfaser, verwendet werden.

In der schematischen Darstellung der Fig. 2 ist ein weiteres erfindungsgemäßes Steuerungssystem für ein Fahrzeug dargestellt, bei dem ein autonomes Fahrsystem 40 diskrete Werte vorgibt, beispielsweise einen Befehl "Fahre von A nach B anhand von Zielkoordinaten". Das autonome Fahrsystem 40 liegt damit in.einer Eingabeebene E2 des in der Fig. 2 dargestellten Steuerungssystems.

Die diskrete Vorgabe des Fahrsystems 40 wird in eine Automatisierungsebene A zu Signalverarbeitungsmodulen 42 und 44 übertragen. Sowohl das Signalverarbeitungsmodul 42 als auch das Modul 44 setzen die Vorgabe des autonomen Fahrsystems 40 in Sollwertsignale um, wodurch eine redundante Signalverarbeitung sichergestellt ist.

Der weitere Aufbau des in der Fig. 2 dargestellten Steuerungssystems mit den Ebenen P, R, K und F entspricht dem in der Fig. 1 dargestellten und im Zusammenhang mit Fig. 1 beschriebenen Aufbau, so dass auf diesbezügliche erneute Ausführungen verzichtet wird. In der Fig. 2 dargestellte Elemente, die mit entsprechenden in der Fig. 1 dargestellten Elementen funktionsgleich sind, wurden mit den gleichen Bezugszeichen versehen.

Die Reihenfolge der Signalverarbeitung bei der in Fig. 1 gezeigten Ausführungsform in der Eingabeebene E1, der prediktiven Ebene P, der reaktiven Ebene R, der Koordinationsebene K und der Ausführungsebene F sowie bei der in Fig. 2 gezeigten Ausführungsform in der Eingabeebene E1, der Automatisierungsebene A und den Ebenen P, R, K und F liegt fest und es erfolgt eine zyklische Abarbeitung in einem festgelegten Takt.

Möglich sind jedoch Ausführungsformen des Steuerungssystems, bei denen die reaktive Ebene R erst unterhalb der Koordinationsebene K angeordnet ist. Die Korrektur anhand von aktuellen Fahrzuständen erfolgt dann durch Verarbeitung der in der Koordinationsebene K erzeugten Ansteuersignale. Ein solches Vorgehen kann im Hinblick auf eine schnelle Reaktion auf aktuelle Fahrzustände vorteilhaft sein, da unmittelbar die Ansteuersignale korrigiert werden und nicht erst die Signalverarbeitung der Koordinationsebene K abgewartet werden muß.

Eine Verbesserung der Zuverlässigkeit der in den Fig. 1 und 2 dargestellten Steuerungssysteme wird durch redundante Ausführung der Software in den Signalverarbeitungsmodulen 12 bis 20 und 42 und 44 erreicht. Einerseits können die Ergebnisse der Signalverarbeitung damit überprüft werden und andererseits ist die Funktion des Steuerungssystems auch bei Teilausfall der Software noch gewährleistet.

## Patentansprüche

1. Steuerungssystem für ein Fahrzeug mit mehreren Signalverarbeitungsebenen (E1, E2, A, P, R, K, F) und Aktuatoren (26, 28, 30), insbesondere für Bremse, Lenkung, Motor und Getriebe, zur Umsetzung von Ansteuersignalen, wobei als Signalverarbeitungsebenen vorgesehen sind:
- eine Eingabeebene (E1) mit Einrichtungen (10) zum Eingeben kontinuierlicher Vorgaben eines Fahrers und zum Umsetzen der Vorgaben in Sollwertsignale oder eine Eingabeebene (E2) mit Einrichtungen zum Eingeben diskreter Vorgaben eines Fahrsystems (40) sowie eine Automatisierungsebene (A) mit ersten Signalverarbeitungsmodulen (42, 44) zum Umsetzen der Vorgaben der Eingabeebene (E2) in Sollwert-signale,
- eine prediktive Ebene (P) mit zweiten Signalverarbeitungsmodulen (12, 14) zum Korrigieren der Sollwertsignale anhand einer Voraussage von Fahrzuständen und/oder eine reaktive Ebene (R) mit dritten Signalverarbeitungsmodulen (16, 18) zum Korrigieren der Sollwertsignale anhand von aktuellen Fahrzuständen,
- eine Koordinationsebene (K) mit vierten Signalverarbeitungsmodulen (20, 22) zum Umsetzen der Sollwertsignale in Ansteuersignale und
- eine Ausführungsebene (F) mit den Aktuatoren (26, 28, 30) zum Ausführen der Ansteuersignale,
**dadurch gekennzeichnet, dass**
- die Aktuatoren (26, 28, 30) mit den vierten Signalverarbeitungsmodulen (20, 22) und untereinander durch einen fehlertoleranten, redundanten und bidirektionalen Datenbus (24) verbunden sind und die ersten (42, 44), zweiten (12, 14), dritten (16, 18) und/oder vierten (20, 22) Signalverarbeitungsmodule zur redundanten Signalverarbeitung geeignet sind und zwischen zwei aufeinanderfolgenden Signalverarbeitungsebenen Einrichtungen zur fehlertoleranten, redundanten und bidirektionalen Datenübertragung vorgesehen sind.

2. Steuerungssystem nach einem der vorstehenden Ansprüche,
**dadurch gekennzeichnet, dass**
die reaktive Ebene zwischen der Koordinationsebene und der Ausführungsebene angeordnet ist.

3. Steuerungssystem nach einem der vorstehenden Ansprüche,
**dadurch gekennzeichnet, dass**
wenigstens einem Aktuator (26) ein reaktives Signalverarbeitungsmodul (32) zur Reaktion auf kritische, aktuelle Fahrzustände unmittelbar zugeordnet ist.

4. Steuerungssystem nach einem der vorstehenden Ansprüche,
**dadurch gekennzeichnet, dass**
Einrichtungen (34) zur Energieversorgung für alle Signalverarbeitungsebenen (E1, E2, A, P, R, K, F) redundant ausgeführt sind.

5. Steuerungssystem nach einem der vorstehenden Ansprüche,
**dadurch gekennzeichnet, dass**
die Einrichtungen zur bidirektionalen Datenübertragung als Lichtwellenleiter ausgeführt sind.

6. Steuerungssystem nach einem der vorstehenden Ansprüche,
**dadurch gekennzeichnet, dass**
in der Automatisierungsebene (A), der prediktiven Ebene (P), der reaktiven Ebene (R) und der Koordinationsebene (K) jeweils wenigstens zwei physikalisch getrennte erste (42, 44), zweite (12, 14), dritte (16, 18) beziehungsweise vierte (20, 22) Signalverarbeitungsmodule zur redundanten Signalverarbeitung vorgesehen sind.

7. Steuerungssystem nach einem der vorstehenden Ansprüche,
**dadurch gekennzeichnet, dass**
in den ersten (42, 44), zweiten (12, 14), dritten (16, 18) und/oder vierten (20, 22) Signalverarbeitungsmodulen vorgesehene Software redundant ausgeführt ist.

8. Verfahren zur Steuerung eines Fahrzeugs, insbesondere von dessen Bremse, Lenkung, Motor und Getriebe, mit folgenden Schritten :
- Eingeben kontinuierlicher Vorgaben eines Fahrers oder diskreter Vorgaben eines Fahrsystems (40) und Umsetzen der Vorgaben in Sollwertsignale,
- Korrigieren der Sollwertsignale anhand einer Voraussage von Fahrzuständen und/oder Korrigieren der Sollwertsignale anhand von aktuellen Fahrzuständen,
- Umsetzen der Sollwertsignale in Ansteuersignale und
- Ausführen der Ansteuersignale durch Aktuatoren (26, 28, 30),
**gekennzeichnet dadurch, daß**
- die Ansteuersignale zu den Aktuatoren (26, 28, 30) sowie Istwertsignale und Diagnosesignale von den Aktuatoren (26, 28, 30) in fehlertoleranter und redundanter Weise über einen Datenbus (24) übertragen werden, das Umsetzen der Vorgaben in Sollwertsignale, das Korrigieren der Sollwertsignale und das Umsetzen der Sollwertsignale in Ansteuersignale in redundanter Weise erfolgt und Sollwertsignale, Istwertsignale sowie Diagnosesignale auf gemeinsamen Datenleitungen fehlertolerant, redundant und bidirektional übertragen werden.

## Claims

1. A control system for a vehicle with several signal processing levels (E 1, E2, A, P, R, K, F) and actuators (26, 28, 30), in particular for brakes, steering, engine and transmission, for the conversion of triggering signals, **characterised in that**
the following signalling levels are provided:
- an input level (E1) with devices (10) for inputting values continuously pre-set by a driver and for converting these pre-set values into set-point signals or an input level (E2) with devices for inputting discrete values pre-set by a driving system (40) and an automation level (A) with first signal processing modules (42, 44) for converting the pre-set values input at input level (E2) into set-point signals,
- a predictive level (P) with second signal processing modules (12, 14) for correcting the set-point signals on the basis of a prediction of driving conditions and/or a reactive level (R) with third signal processing modules (16, 18) for correcting the set-point signals on the basis if current driving conditions,
- a co-ordination level (K) with fourth signal processing modules (20, 22) for converting the set-point signals into triggering signals and
- an execution level (F) with actuators (26, 28, 30) for executing the triggering signals,
- the actuators (26, 28, 30) being connected to the fourth signal processing modules (20, 22) and to each other by a failure-tolerant, redundant and bi-directional data bus (24), the first (42, 44), second (12, 14), third (16, 18) and/or fourth (20, 22) signal processing modules being suitable for redundant signal processing and devices for failure-tolerant, redundant and bi-directional data transmission being provided between two successive signal processing levels.

2. A control system in accordance with one of the preceding claims, **characterised in that**
the reactive level is positioned between the co-ordination level and the execution level.

3. A control system in accordance with one of the preceding claims, **characterised in that**
a reactive signal processing module (32) for reacting to critical, current driving conditions is directly associated with at least one actuator (26).

4. A control system in accordance with one of the preceding claims, **characterised in that**
devices (34) for the supply of energy to all signal processing levels (E1, E2, A, P, R, K, F) are of redundant design.

5. A control system in accordance with one of the preceding claims, **characterised in that**
the devices for bi-directional data transmission are designed as optical wave guides.

6. A control system in accordance with one of the preceding claims, **characterised in that**
at least two physically separated first (42, 44), second (12, 14), third (16, 18) and fourth (20, 22) signal processing modules for redundant signal processing are provided at the automation level (A), at the predictive level (P), at the reactive level (R) and at the co-ordination level (K).

7. A control system in accordance with one of the preceding claims, **characterised in that**
software provided in the first (42, 44), second (12, 14), third (16, 18) and/or fourth (20, 22) signal processing modules is of redundant design.

8. A process for controlling a vehicle, in particular its brakes, steering, engine and transmission,
**characterised by**
the following steps:
- inputting of values continuously pre-set by a driver or discrete values pre-set by a driving system (40) and conversion of the pre-set values into set-point signals,
- correction of the set-point signals on the basis of a prediction of driving conditions and/or correction of the set-point signals on the basis of current driving conditions,
- conversion of the set-point signals into triggering signals and
- execution of the triggering signals by actuators (26, 28, 30),
- the triggering signals being transmitted to the actuators (26, 28, 30) and the actual value signals and diagnostic signals being transmitted by the actuators (26, 28, 30) via a data bus (24) in a failure-tolerant and redundant manner, the conversion of the pre-set values into set-point signals, the correction of the set-point signals and the conversion of the set-point signals into triggering signals being carried out redundantly and set-point signals, actual value signals and diagnostic signals being transmitted on common data lines in a failure-tolerant, redundant and bi-directional manner.

## Revendications

1. Système de commande pour un véhicule avec plusieurs niveaux de traitement des signaux (E1, E2, A, P, R, K, F) et des actionneurs (26, 28, 30), tout particulièrement pour le frein, la direction, le moteur et la boîte de vitesse, afin de convertir les signaux de commande, **caractérisé en ce que** sont prévus comme niveaux de traitement des signaux :
- un niveau d'entrée des données (E1) doté de dispositifs (10) permettant d'entrer les directives continues d'un conducteur et de transformer les directives en signaux de valeurs de consigne ou un niveau d'entrée des données (E2) doté de dispositifs permettant d'entrer les directives discrètes d'un système de conduite (40) ainsi qu'un niveau d'automatisation (A) avec des premiers modules de traitement des signaux (42, 44) permettant de convertir les directives du niveau d'entrée des données (E2) en signaux de valeurs de consigne,
- un niveau de prédiction (P) doté de deuxièmes modules de traitement des signaux (12, 14) permettant de corriger les signaux de valeurs de consigne à l'aide d'une prévision des situations de conduite et/ou un niveau réactif (R) doté de troisièmes modules de traitement des signaux (16, 18) permettant de corriger les signaux de valeurs de consigne à l'aide des situations de conduite actuelles,
- un niveau de coordination (K) doté de quatrièmes modules de traitement des signaux (20, 22) permettant de convertir les signaux de valeurs de consigne en signaux de commande et
- un niveau d'exécution (F) doté des actionneurs (26, 28, 30) permettant d'exécuter les signaux de commande,
- moyennant quoi, les actionneurs (26, 28, 30) sont reliés avec les quatrièmes modules de traitement des signaux (20, 22) et entre eux par l'intermédiaire d'un bus de données tolérant aux erreurs, redondant et bidirectionnel (24) et les premiers (42, 44), deuxièmes (12, 14), troisièmes (16, 18) et/ou quatrièmes (20, 22) modules de traitement des signaux sont appropriés pour le traitement redondant des signaux et des dispositifs sont prévus entre deux niveaux de traitement des signaux situés l'un à côté de l'autre afin de réaliser une transmission de données tolérante aux erreurs, redondante et bidirectionnelle.

2. Système de commande selon l'une des revendications précédentes, **caractérisé en ce que** le niveau réactif est agencé entre le niveau de coordination et le niveau d'exécution.

3. Système de commande selon l'une des revendications précédentes, **caractérisé en ce qu'**un module de traitement des signaux réactif (32) réagissant aux situations de conduite critiques et actuelles est assigné directement à au moins un actionneur (26).

4. Système de commande selon l'une des revendications précédentes, **caractérisé en ce que** les dispositifs (34) d'alimentation en énergie pour tous les niveaux de traitement des signaux (E1, E2, A, P, R, K, F) sont construits de manière redondante.

5. Système de commande selon l'une des revendications précédentes, **caractérisé en ce que** les dispositifs de transmission bidirectionnelle des données sont construits en fibre optique

6. Système de commande selon l'une des revendications précédentes, **caractérisé en ce que** les niveaux d'automatisation (A), de prédiction (P), réactif (R) et de coordination (K) comprennent chacun deux, respectivement, premiers (42, 44), deuxièmes (12, 14), troisièmes (16, 18) et/ou quatrièmes (20, 22) modules physiquement séparés de traitement des signaux permettant le traitement redondant des signaux.

7. Système de commande selon l'une des revendications précédentes, **caractérisé en ce que** les logiciels prévus dans les premiers (42, 44), deuxièmes (12, 14), troisièmes (16, 18) et/ou quatrièmes (20, 22) modules de traitement des signaux sont construits de manière redondante.

8. Système de commande d'un véhicule, tout particulièrement de son frein, sa direction, son moteur et sa boîte de vitesse, **caractérisé par** les étapes suivantes :
- entrée de commandes continues d'un conducteur ou de commandes discrètes d'un système de conduite (40) et conversion des données en signaux de valeurs de consigne,
- correction des signaux de valeurs de consigne à l'aide d'une prévision des situations de conduite et/ou correction des signaux de valeurs de conduite à l'aide des situations de conduites actuelles,
- conversion des signaux de valeurs de consigne en signaux de commande et
- exécution des signaux de commande par des actionneurs (26, 28, 30),
- moyennant quoi les signaux de commande aux actionneurs (26, 28, 30) ainsi que les signaux de valeurs réelles et les signaux de diagnostic sont transmis par les actionneurs (26, 28, 30) de manière tolérante aux erreurs et redondante par l'intermédiaire d'un bus de données (24), la conversion des directives en signaux de valeurs de consigne, la correction des signaux de valeurs de consigne et la conversion des signaux de valeurs de consigne en signaux de commande se fait de manière redondante et les signaux de valeurs de consigne, les signaux de valeurs réelles ainsi que les signaux de diagnostic sont transmis sur des lignes de données communes de manière tolérante aux erreurs, redondante et bidirectionnelle.
